# EUROPEAN PATENT APPLICATION

(11) **EP 4 769 252 A1**
(43) Date of publication of application: **01.07.2026**
(21) Application number: 25227093.9
(22) Date of filing: 23.12.2025
(51) Int. Cl.: G06N 20/00, G06N 3/008

(54) **DIGITAL ASSISTANT INTERACTIONS HANDLING**

(30) Priority: 30.12.2024 US 202419005871
(71) Applicant: American Express Travel Related Services Co., Inc., New York, NY 10285-4900 (US)
(72) Inventor: CHANDRAMOHAN, Anand, New York, 10285-4900 (US); EBY, Alaric M., New York, 10285-4900 (US)
(74) Representative: Marks & Clerk LLP

(57) **Abstract**

Disclosed herein are system, method, and computer program product embodiments for generating and customizing micro agents. An embodiment comprises receiving, from a user device, a request to customize template agents. The embodiment further comprises selecting a set of template agents, receiving a selection of at least at template agent, personalizing the a least the template agent to obtain a micro agent, receiving from the user device a request to complete one or more tasks associated with a service provider system, transmitting using the micro agent, a command to the service provider system to perform the one or more tasks, and transmitting, to the user device, a notification indicating that the one or more tasks are completed.

## Description

### TECHNICAL FIELD

Aspects relate to systems and methods for handling transactions between digital agents.

### BACKGROUND

Generative artificial intelligence (AI) and large language models (LLMs) (e.g., Generative Pre-trained Transforms (GPTs)) hold enormous promise. This technology has already changed the way humans interact with computers because LLMs can generate novel human-like content based on inputs and/or prompts that can mimic the creativity and ingenuity of humans.

To interface with LLMs, digital assistants such as bots and digital agents have been developed. A digital assistant may receive an input and/or a query and output a response for the input and/or query. However, the digital assistant may go through multiple rounds of inputs until the LLM/GPT generates the desired answer. In addition, the digital assistant may not be able to handle complicated tasks that require decision making and multiple iterations with fulfillment systems. Further, the LLMs may not accurately perform a requested task due to the lack of personalization. For example, the LLM may not be unware of preferences of a digital assistant or a user which may lead to rejected transactions or additional iterations before the requested task is completed successfully.

### SUMMARY

Aspects of this disclosure are directed to systems and methods for a bot recommendation and provisioning service (e.g., for personalizing base agents) to facilitate online transactions between an initiating party (human customer or AI agent) and a fulfillment service (e.g., a merchant system). An embodiment comprises receiving, from a user device, a request to customize template agents. The embodiment further comprises selecting a set of template agents, receiving a selection of at least a template agent, personalizing the at least the template agent to obtain a micro agent, receiving from the user device a request to complete one or more tasks associated with a service provider system, transmitting using the micro agent, a command to the service provider system to perform the one or more tasks, and transmitting, to the user device, a notification indicating that the one or more tasks are completed.

An embodiment comprises receiving, from a user device, an input. The input comprises a request to complete one or more tasks. The embodiment further comprises identifying a template digital agent from a plurality of template digital agents based on the input, selecting, using the template digital agent, a service provider system, and transmitting, using the template digital agent, a command to the service provider system to perform the one or more tasks.

Certain aspects of the disclosure have other steps or elements in addition to or in place of those mentioned above. The steps or elements will become apparent to those skilled in the art from a reading of the following detailed description when taken with reference to the accompanying drawings.

### BRIEF DESCRIPTION OF THE DRAWINGS

The accompanying drawings, which are incorporated herein and form a part of the specification, illustrate aspects of the present disclosure and, together with the description, further serve to explain the principles of the disclosure and to enable a person skilled in the art to make and use the aspects.
FIG. 1 is a block diagram of an environment for a system for handling digital assistant transactions, in accordance with an embodiment of the present disclosure.
FIG. 2 is a diagram that shows a processing flow for the system for handling digital assistant transactions, in accordance with an embodiment of the present disclosure.
FIG. 3 is a flow chart for a method for generating one or more micro agents, in accordance with an embodiment of the present disclosure.
FIG. 4 is a flow chart for a method for attracting a digital agent to a service provider, in accordance with an embodiment of the present disclosure.
FIG. 5 is a flow chart for a method for handling digital assistant transactions, in accordance with an embodiment of the present disclosure.
FIG. 6 is an example computer system useful for implementing various embodiments.

In the drawings, like reference numbers generally indicate identical or similar elements. Additionally, generally, the left-most digit(s) of a reference number identifies the drawing in which the reference number first appears.

### DETAILED DESCRIPTION

Aspects of the present disclosure relate to a system for handling transactions between digital assistants. In particular, the present disclosure relates to generating and customizing micro agents configured to facilitate transactions between a personal digital agent and a server provider. Micro agents are artificial intelligence (AI) units that are designed to perform a single task or a limited number of tasks.

Current transaction environments require interaction with multiple channels and services to fulfill transaction requests. Navigating through different channels and services can be inconvenient and time consuming as it requires requests and communication from customer device to different service providers and interfaces. Digital assistants may perform simple tasks to automate the transaction process. For example, a digital assistant may order an item from a store with a previously stored credit card. Digital assistants may receive more complicated tasks that require decision making and multiple interactions with fulfillment systems. For example, a digital assistant may receive a request for planning a vacation or negotiating a financial transaction with a credit card company, which are tasks that require the digital assistant to make decisions for complex situations such as dates, decision making for hotels, or settling on an agreed upon value for the financial transaction. Automated decision making may involve the digital assistant navigating multiple service providers (e.g., web crawling), submitting requests, receiving and analyzing responses, and making determinations on which responses are likely to fulfill the requested task. What is needed is a system and a method to facilitate transaction streams between customer devices and fulfillment systems in a way that is customized for each transaction and personalized for each customer device, and that will accurately and efficiently perform requested tasks with minimal supervision. The system reduces the number of iterations between digital assistants and providers while accurately performing the task. The system and method is also agnostic as to whether the customer device is a real human being or digital assistants.

The system and method described herein provides an agent-as-a-service framework for dynamically provisioning agents on a transaction basis to facilitate in the transaction process minimal touchpoints. Provisioned agents may be personalized for each transaction and customer device by feeding targeted personalized insights and recommendations to make decision based on agreed rules by the customer or a personal digital assistant. In some aspects, the agent-as-a-service framework may comprise an agent enrollment service, an agent recommendation service, and an agent provisioning component. The system described herein may provision one or more micro agents to perform tasks within a transaction environment that involves a customer device (e.g., which may be a human or a digital assistant) such as monitoring active events from the customers or their respective digital assistants. The one or more micro agents may be created and provisioned based on transaction requests and/or services offered by the system or other service providers. The system is configured to provide relevant and personalized recommendations and offers for the customer or the customer digital assistant. The system described may use machine learning models (supervised or unsupervised models) to provide the recommendations.

A user device or a personal digital assistant may directly or digitally engage with micro agent(s) through their trusted device to facilitate and fulfill one or more tasks. The micro agents may handle complex tasks. For example, the micro agents are configured to plan, strategize, and act on behalf of customers or digital assistants.

The systems and methods described herein provide the technical advantage facilitating transactions and actions within transaction streams in an automated and intelligent manner by enabling one or more agents to act on behalf of parties to a transaction and provisioning of these one or more agents is done in a personalized manner for each transaction to ensure that transactions are performed based on customer requirements and preferences.

As used herein, a digital assistant is an artificial intelligence entity that is configured to perform one or more actions such as conducting a conversation with users, responding to user queries, and initiating transactions. The digital assistant may be a bot or a digital agent. A bot is an automated program designed to perform repetitive tasks. For example, a "chat" bot may follow a scripted conversation workflow. A digital agent may refer is an artificial intelligence entity that use generative AI, large language models, and natural language processing (NLP) to understand, respond, and perform actions in response to queries.

Various embodiments of these features will now be discussed with respect to the corresponding figures.

### System Overview and Function

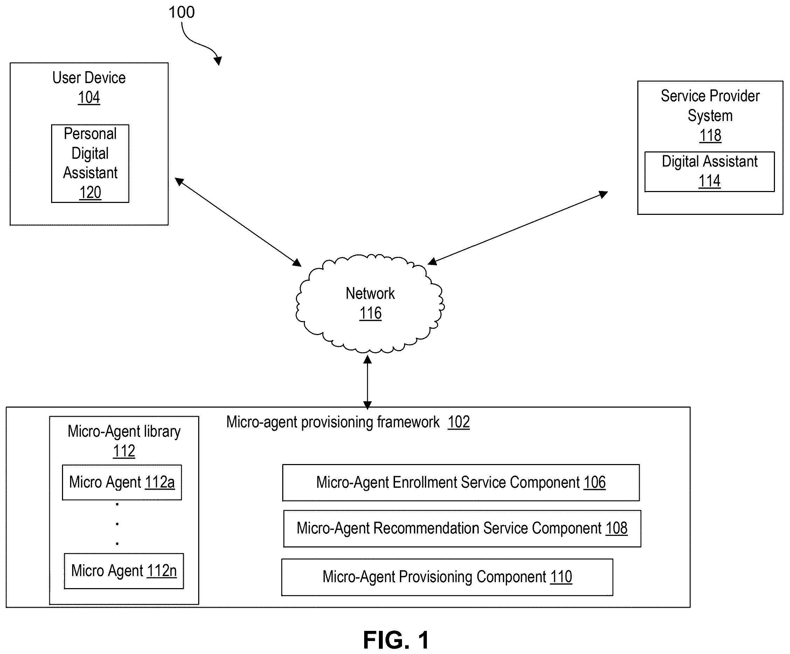

FIG. 1 is a block diagram of an environment 100 for handling digital assistant transactions, in accordance with an embodiment of the present disclosure. Environment 100 may include a micro-agent provisioning framework 102, a user device 104, and a service provider system 118.

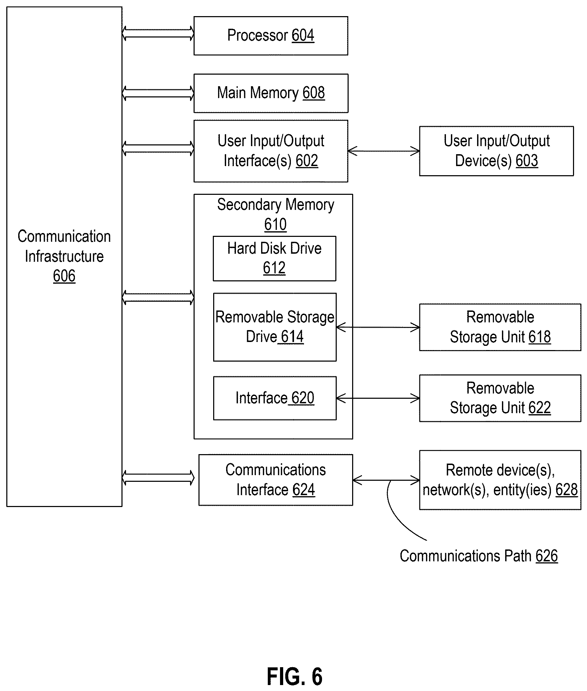

User device 104 may be a computer system such as a computer system 600 described with reference to FIG. 6. For example, user device 104 may be any variety of electronic devices, such as a mobile device (e.g., smartphone, tablet, pager, personal digital assistant (PDA)), a computer (e.g., a laptop computer, a desktop computer, a server), and/or a wearable device (e.g., a smartwatch). User device 104 may include one or more processors and/or memory. User device 104 may interact with micro-agent provisioning framework 102 to personalize micro agents and submit one or more queries to the micro agents. As described above, micro agents are AI units that are designed to perform a single task or a limited number of tasks. Micro agents are trained on a focused dataset.

In some aspects, user device 104 may include or may be communicatively coupled with a personal digital assistant 120. User device 104 may communicate with personal digital assistant 120 via an application programming interface (API). Personal digital assistant 120 may receive a user input and process the user input. In some aspects, personal digital assistant 120 may interact with micro-agent provisioning framework 102 to identify and execute one or more tasks contained in the user input. User device 104 may interact with micro-agent provisioning framework 102 and service provider system 118 via network 116.

Personal digital assistant 120 may receive interactions from the user. The interactions may be of different forms or types of input. The input may include, but is not limited to text input, voice input, touch input, sound input, image input, or/and video input. The input may include a request for the micro-agent provisioning framework 102 to perform the one or more tasks. The actions may include a transactional action (e.g., sending an email, making a telephone call, ordering items, planning a vacation), providing information in response to a query from the user (e.g., checking on a financial transaction), or the like.

In some aspects, personal digital assistant 120 may be configured to translate vocal utterances into text during voice-based interactions. Personal digital assistant 120 may be configured to extract acoustic data from human speech and compare and contrast the acoustic data to stored subword data, select an appropriate subword that can be concatenated with other selected subwords or words for post processing.

In some aspects, personal digital assistant 120 may be added as a supplemental user to one or more accounts associated with the user. For example, personal digital assistant 120 may be added as a supplemental card member and can perform one or more actions associated with the card. Personal digital assistant 120 may have login credentials to login to the account to perform actions such as paying the monthly credit card statement, reviewing the transactions, or using the associated payment information to complete transactions with service provider system 118.

Personal digital assistant 120 or user device 104 may access and enroll with digital micro-agent provisioning framework 102. Personal digital assistant 120 or user device 104 may transmit to micro-agent provisioning framework 102 information indicating the preferences of the user or the personal digital assistant 120. As described further below, micro-agent provisioning framework 102 may process the information and create or customize one or more micro agents 112a-n within micro-agent library 112 based on the preferences of the user or personal digital assistant 120.

In some aspects, micro-agent provisioning framework 102 may comprise a micro-agent enrollment service component 106, a micro agent recommendation service component 108, a micro- agent provisioning component 110, and micro-agent library 112 that stores multiple micro agents (e.g., micro agent 112a, ..., micro agent 112n). Each micro agent of micro agents 112a-n may handle a type of request received from personal digital assistant 120 or user device 104. For example, micro agent 112a may handle purchases and micro agent 112n may handle financial transactions. Micro-agent provisioning framework 102 may provide recommendations for micro agents and/or items that the customer or personal digital assistant may find useful. A micro agent may be a large language model (LLM) artificial intelligence. The micro agent may be implemented using an artificial neural network (ANN).

In some aspects, micro-agent provisioning framework 102 may operate on one or more servers and/or databases. In some aspects, micro-agent provisioning framework 102 may be implemented using computer system 600 as described further with reference to FIG. 6. Micro-agent provisioning framework 102 may provide a cluster computing system or a cloud computing system to generate or customize of micro agents 112a-n and provide micro agents 112a-n to user device 104. Micro agents 112a-n may be generated based on input data received from user device 104. The input data may be user input received by user device 104 and/or data generated by personal digital assistant 120. Micro agents 112a-n may connect with other internal or external service providers and digital assistants to fulfill a task.

Micro-agent provisioning framework 102 may receive a request from personal digital assistant 120 or user device 104. Micro-agent provisioning framework 102 may comprise a software program (e.g., a chat bot or other digital conversational agent, an interactive voice response (IVR) platform) that receives user interactions from user device 104 or personal digital assistant 120 and responds to the user interactions. After receiving the input, micro-agent provisioning framework 102 may identify a micro agent from micro agents 112a-n to complete the request. For example, if the input received by micro-agent provisioning framework 102 comprises a request to perform a purchase, the request may be further processed by micro agent 112a. As discussed above, micro agents in micro-agent library 112 are personalized for each user device 104 and/or personal digital assistant 120 and their corresponding knowledge base is customized for each customer and/or personal digital assistant 120. This provides the advantage of faster processing of the request as the micro agent may not have to interact with personal digital assistant 120 to obtain the same information for each request (e.g., payment information or login credentials). After identifying the micro agent (e.g., micro agent 112a), micro agent 112a may select and interact with service provider system 118. In some aspects, the micro agents 112a-n may interact with each other to divide complex tasks.

Micro-agent provisioning component 110 may be configured to personalize each micro agent based on the customer historical data and established rules or subscriptions. The hyper personalization of micro-agents is done using historical customer data, interactions, actions, profile and behavioral preferences. The hyper personalization helps with targeted recommendations such that micro-agent provisioning framework 102 may be a preferred choice among any other facilitator for the customer or digital bots to pick from (fulfillment).

Micro-agent provisioning framework 102 may gather data from multiple sources to select and/or create micro agents 112a-n. Micro-agent provisioning framework 102 may gather the data through data mining. The data may include customer data. Customer data may include demographics, preferences, past behaviors, previous purchases, and customer interactions. Customer interactions may include interactions of the user across multiple channels e.g., clicks, mobile application searches and activities, IVR and voice interaction contextual. In addition, the data may be used for recommendation of the micro agents against any ongoing transaction/activity. The data may include information that can influence the relevance of the recommendation such as the time of day/month activity, device information, and the like.

In some aspects, user device 104 or personal digital assistant 120 may submit a transaction request to micro-agent provisioning framework 102 for conducting a transaction with service provider system 118 (e.g., a request to make a purchase). Prior to the transaction request, the user device 104 or personal digital assistant 120 may be involved in a micro agent selection process for selecting a specific micro agent that will act on behalf of user device 104 or personal digital assistant 120 for subsequent transactions. Once selected, the micro agent may be registered or otherwise associated with user device 104 or personal digital assistant 120. As part of the selection process, micro agent recommendation service component 108 may personalize the selected micro agent (e.g., micro agent 112a) with data associated with personal digital assistant 120 or a user of user device 104. The data may include information about the payment cards available for the purchase. For example, two payment cards may be available and can be used to complete the transaction. In addition, the personalized data may include the benefits associated with each respective card. In some aspects, micro agent 112a may retrieve the benefits of each card from a service provider associated with the payment card. For example, micro agent 112a may login to the payment card account to retrieve the latest benefits and any available offers. In one example, a first card may offer 1 point per dollar when used for an airline ticket purchase and a second card may be running an offer and offer 5 points per dollar. Thus, micro agent 112a may suggest the use of the second card to complete the transaction for purchasing the airline ticket. Micro agent 112a may present the results of the request to user device 104 and/or personal digital assistant 120. For example, a message may comprise "the Delta flight is the best flight based on your criteria and you should use your Amex card to make the purchase." Micro agent 112a may receive from user device 104 a user input indicating the approval of the purchase. In some aspects, personal digital assistant 120 may approve the purchase. After receiving the approval, micro agent 112a may execute the transaction with service provider system 118.

In another example, the request may be for a purchase of a pair of shoes. Micro agent 112a may retrieve any discount available to the user or personal digital assistant 120 and purchase history to determine a preferred type of shoes (e.g., casual vs dress). Micro agent 112a may connect with digital assistant 114 of the service provider system 118 to pick a pair of shoes.

In another example, as described above micro-agent 112n may handle financial transactions. User device 104 or personal digital assistant 120 may be involved in a micro agent selection process for selecting an additional micro agent that act on behalf of user device 104 or per personal digital assistant 120 for subsequent financial transactions. Micro agent 112n may monitor financial transactions of an account of the user to detect fraudulent transactions. Micro agent 112n may use past financial transactions to determine whether a transaction is fraudulent. In response to determining that a transaction is fraudulent, micro agent 112n may connect with digital assistant of service provider system 118 to report the fraudulent transaction.

In some aspects, micro-agent recommendation service component 108, micro-agent provisioning component 110, and digital assistant 114 may include one or more supervised or unsupervised learning models. The model may be trained on customer data and server provider data that the customer transact with.

In some aspects, micro-agent provisioning framework 102 may include training and validation systems that train and validate artificial intelligence or machine learning algorithms. Micro-agent provisioning framework 102 may be trained using data collected and statistics. The statistics may include the number of interactions between personal digital assistant 120 and micro-agent library 112. Based on the statistics, micro-agent library 112 may be fine-tuned as described further below.

In some aspects, micro agents 112a-n may interact with multiple bots/agents associated with different service providers. Micro agents 112a-n may select which bots/agent to interact based on previously stored preferences and subscriptions (e.g., during customizing of the micro agent). For example, micro agents 112a-n may interact with service provider system 118.

Service provider system 118 may be a computer system hosted by a merchant. For example, service provider system 118 may be an airline company, a travel booking website, or a financial provider. Service provider system 118 may be implemented using one or more servers and/or databases. Although FIG. 1 shows a single service provider system, it is to be understood that environment 100 include a plurality of service provider systems and micro-agent provisioning framework 102 may interact with one or more service providers.

In some aspects, service provider system 118 may operate on one or more servers and/or databases. In some aspects, service provider system 118 may be implemented using computer system 600 as described further with reference to FIG. 6. Service provider system 118 may include digital assistant 114. Service provider system 118 may interact with user device 104 associated with a customer or personal digital assistant 120. Service provider system 118 may use digital assistant 114 to interact with micro agents 112a-n.

In some aspects, service provider system 118 is configured to attract micro agents 112a-n to select and complete a transaction with service provider system 118. Attract as used herein may refer to one or more features or actions of service provider system 118 that are configured to make micro agents 112a-n selects service provider system 118 among other providers. For example, if micro agents 112a-n are searching for an airline ticket, micro agents 112a-n may interact with multiple service provider systems that offer airline tickets. A service provider system may have features such as micro agents 112a-n interact with the service provider system to search for the airline ticket before interacting with other service providers. In particular, digital assistant 114 is configured to interact with other digital assistants such as micro agents 112a-n and to attract the micro agents 112a-n to perform the transaction with the service provider system 118. Continuing with the planning a vacation example, digital assistant 114 may attract micro agents 112a-n to reserve the airline tickets and accommodations via service provider system 118 among other providers.

In order to attract the micro agents, digital assistant 114 may present features of service provider system 118 to micro agents such as the micro agent selects service provider system 118 among the other service providers. The features may include metrics associated with good reviews or fast processing speed. Service provider system 118 may publish digital assistant 114 via a website associated with the service provider system 118. Service provider system 118 may publish digital assistant 114 via API or an API portal or network. Service provider system 118 may publish digital assistant 114 on social platforms such as Reddit and GitHub. Digital assistant 114 may be further configured to create contents and publish the contents (e.g., travel blogs).

In some aspects, digital assistant 114 may be optimized for search engine optimization (SEO). In some aspects, scripts of digital assistant 114 may include keywords to drive traffic to digital assistant 114. In addition, the scripts may be updated based on analytics data to improve relevancy and ensure better engagement with other micro agents.

In some aspects, service provider system 118 is configured to broadcast digital assistant 114 efficiently to publish the capabilities of the service provider. In some aspects, digital assistant 114 may provide incentives such as rewards to micro-agent provisioning framework 102 and personal digital assistant 120. In some aspects, digital assistant 114 may use obtain customer data from micro-agent provisioning framework 102 via a micro agent transacting with service provider system 118. The customer data may include demographic information. Thus, digital assistant 114 may provide a personalized response based on region preferences. In addition, digital assistant 114 may use customer data to present the response in a personalized format. For example, the digital assistant 114 may provide a summary of the transaction at the beginning of the interaction if this is the preferred format of the customer or personal digital assistant 120.

In some aspects, a feedback loop may be used for optimization and adaptation of the digital assistant 114. Data analytics may be collected and analyzed. Data analytics may include information about the transaction and whether the transaction was declined by micro-agent provisioning framework 102 or personal digital assistant 120 and the satisfaction of the user and personal digital assistant 120. The satisfaction may be enhanced by trusting the micro agent of the user or the personal digital assistant 120 to provide seamless authentication to service provider system 118.

As used herein, the API may comprise any software capable of performing an interaction between one or more software components as well as interacting with and/or accessing one or more data storage elements (e.g., server systems, databases, hard drives, and the like). An API may comprise a library that specifies routines, data structures, object classes, variables, and the like. Thus, an API may be formulated in a variety of ways and based upon a variety of specifications or standards, including, for example, POSIX, the MICROSOFT WINDOWS API ^{®}, a standard library such as C++, a JAVA API, and the like.

Network 116 refers to a telecommunications network, such as a wired or wireless network. Network 116 can span and represent a variety of networks and network topologies. For example, network 116 can include wireless communication, wired communication, optical communication, ultrasonic communication, or a combination thereof. For example, satellite communication, cellular communication, Bluetooth, Infrared Data Association standard (IrDA), wireless fidelity (WiFi), and worldwide interoperability for microwave access (WiMAX) are examples of wireless communication that may be included in network 116. Cable, Ethernet, digital subscriber line (DSL), fiber optic lines, fiber to the home (FTTH), and plain old telephone service (POTS) are examples of wired communication that may be included in the network 116. Further, network 116 can traverse a number of topologies and distances. For example, network 116 can include a direct connection, personal area network (PAN), local area network (LAN), metropolitan area network (MAN), wide area network (WAN), or a combination thereof.

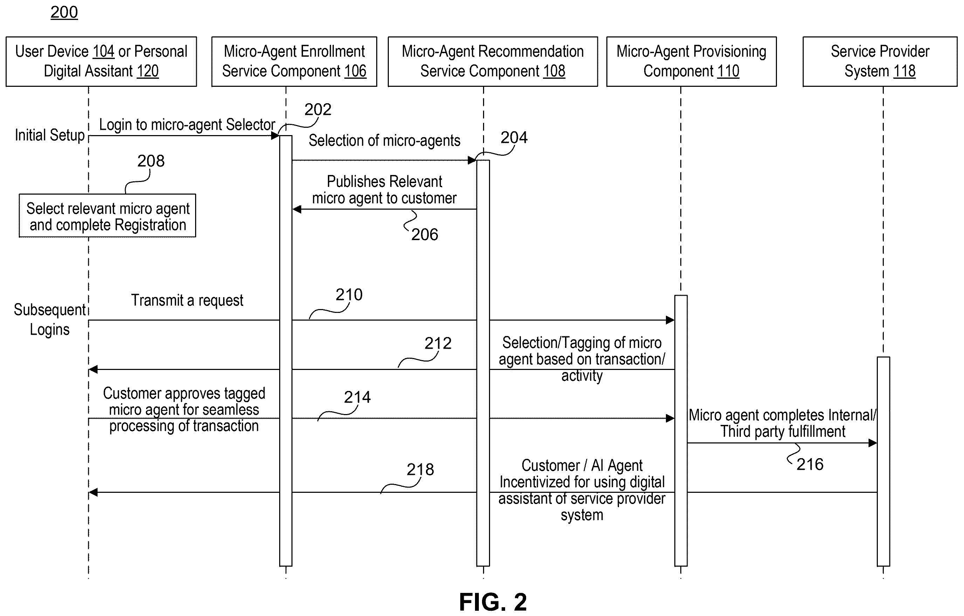

FIG. 2 is a diagram that shows a processing flow 200 for handling digital assistant transactions, in accordance with an embodiment of the present disclosure. Method 200 shall be described with reference to FIG. 1. However, method 200 is not limited to that example embodiment.

While method 200 is described with reference to user device 104, service provider system 118, and micro-agent provisioning framework 102, method 200 may be executed on any computing device, such as, for example, the computer system described with reference to FIG. 6 and/or processing logic that may comprise hardware (e.g., circuitry, dedicated logic, programmable logic, microcode, etc.), software (e.g., instructions executing on a processing device), or a combination thereof.

It is to be appreciated that not all steps may be needed to perform the disclosure provided herein. Further, some of the steps may be performed simultaneously, or in a different order than shown in FIG. 2.

At 202, user device 104 or personal digital assistant 120 may login to micro-agent enrollment service component 106. Micro-agent enrollment service component 106 may prompt the user or personal digital assistant 120 to enter login credentials. Micro-agent enrollment service component 106 may provide personal digital assistant 120 with a list of preferences. In some aspects, the preferences may comprise a list of actions that the agents may or may not do. For example, personal digital assistant 120 may select that the digital agent may select a flight however the digital agent may not book the flight before receiving confirmation from the personal digital assistant 120 or a user input received via user device 104 indicating that the user approves the flight. In some aspects, preferences may also include user preferences for different categories of transactions. For example, shopping transactions may include user preferences such as preferred vendors, budget for specific content (e.g., $100 for shoes, $150 for shirts), and preferred styles for content (e.g., black shoes instead of blue shoes, button down shirts instead of polo shirts). Travel-related transactions may include user preferences for preferred airlines, preferred vendors for car rentals or lodging, budget for different sub-categories such as tickets, lodging, car rentals, and preferences for specific dates or periods for stays (e.g., weekend travel instead of weekday travel, avoid red-eye flights). Service-related transactions may include user preferences for preferred restaurants or dining, preferred meals, preferred times to eat, and preferred guests. User preferences may include preferred credit cards for transactions, preferred credit cards for specific categories of transactions (e.g., a credit card for restaurants, a credit card for travel purchases). These preferences may be tied to rewards conditions associated with each credit card, such as a credit card that provides more points for travel-related purchases and a credit card that provides more points for food-related purchases. In some aspects, preferences further include historical customer data such as previous purchases, historical interactions such as websites visited, and behavioral preferences.

At 204, micro-agent enrollment service component 106 may transmit the request and corresponding data to micro-agent recommendation service component 108. Micro-agent recommendation service component 108 may identify one or more micro agents based on the received data. In some aspects, micro-agent recommendation service component 108 may identify the one or more micro agents based on customer data that includes demographics, preferences, historical customer data such as previous purchases, historical interactions such as websites visited, and behavioral preferences. For example, if the previous purchases indicate the purchase of multiple airline tickets each month, then micro-agent recommendation service component 108 may suggest a "travel" micro agent. In another example, if the demographics indicates the customer lives in cold climate area, micro-agent recommendation service component 108 may suggest a "cold-weather" micro agent that targets purchases associated with cold weather such as winter and ski outfits.

The one or more agents may be pre-created and stored in micro-agent library 112 and comprise one or more slots enabled for customization based on the provided user preferences. The slots may refer to template that are filed based on the user preferences. For example, for a travel micro agent. A first slot may be "home airport" and a second slot may be "frequent flyer program." Personal digital assistant 120 may interact with the one or more agents to process requests as further described below.

At 206, micro-agent recommendation service 108 may publish the relevant agents (micro agent) to user device 104 or personal digital assistant 120. This provides the advantage of receiving a list of available agents instead of connecting to multiple systems or platforms to personalize different agents. The micro agents may be further customized based on user input and user preferences.

At 208, user device 104 or personal digital assistant 120 may select one or more relevant agents from the published agents to complete the registration. For example, personal digital assistant 120 may select a "travel" agent, a "fashion" agent, and a "restaurant" agent.

At 210, user device 104 or personal digital assistant 120 may transmit to micro-agent provisioning component 110 a request to complete one or more tasks with one or more service provider systems.

At 212, micro-agent provisioning component 110 may select the micro agent based on the request. Micro-agent provisioning component 110 may personalize the micro-agent. For example, if the request is for the purchase of a ticket, micro-agent provisioning component 110 may select the "travel" micro agent and personalizes the micro agent with the data associated with user device 104 or personal digital assistant 120. For example, the frequent fliers accounts associated with the user device or the personal digital assistant are stored and used by the micro agent when submitting a command for service provider systems. In some aspects, micro-agent provisioning component 110 may personalize the micro agent selected at 208 before receiving the request.

At 214, user device 104 may receive a user input indicating the approval of the micro agent. In some aspects, personal digital assistant 120 may approve the micro agent. In some aspects, step 214 may be skipped. For example, personal digital assistant 120 may approve the micro-agent during the initial setup. In other aspects, approval may not be required after micro-agent provisioning component 110 selects the micro-agent.

At 216, micro-agent provisioning component 110 may complete the request using the micro agent. For example, the micro-agent may interact with service provider system 118 to complete the request.

At 218, service provider system 118 may incentivize personal digital assistant 120 or the customer for completing a transaction using digital assistant 114. In some aspects, if user device 104 or personal digital assistant 120 is enrolled in a "payment" micro agent. When the payment is due, personal digital assistant 120 is notified by the enrolled "payment" micro agent of a payment due. For example, a BOT icon may be provided on user device 104 when the payment is due. For example, the BOT icon may be provided next to a "payment" tab in a webpage or mobile application associated with the account of the user. Thus, the customer is alerted of a payment. Based on "payment" micro agent setting, the micro agent may receive a user input indicating that the customer is initiating the payment. The micro agent may complete the payment. In other aspects, micro agent can schedule a later time for payment fulfillment.

### Methods of Operation

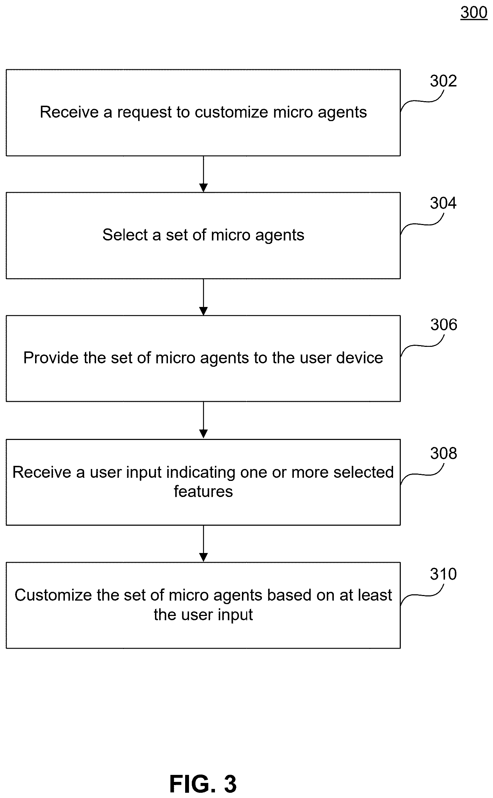

FIG. 3 is a flow chart for a method 300 for generating one or more micro agents, in accordance with an embodiment of the present disclosure. Method 300 may be performed as a series of steps by a computing unit such as a processor. For example, method 300 may be implemented by micro-agent provisioning framework 102 and/or computer system 600 of FIG. 6. Method 300 shall be described with reference to FIG. 1, however, method 300 is not limited to that example embodiment.

In 302, micro-agent provisioning framework 102 may receive a request to customize micro agents.

In 304, micro-agent provisioning framework 102 may select a set of micro agents. The micro agent may be a template agent that can be customized. Micro-agent provisioning framework 102 may select the set of template agents based on customer data such as previous purchases, historical interactions such as websites, demographics, and the like. For example, if the previous purchases includes a high number of airline ticket purchases compared to other purchases, then micro-agent provisioning framework 102 may select a template for a "travel" micro agent. The micro-agent provisioning framework 102 may also select additional micro agents. For example, the micro-agent provisioning framework 102 may also select a template for a "city tour" micro agent.

In 306, micro-agent provisioning framework 102 may provide the set of micro agents to the user device. Micro-agent provisioning framework 102 may display a list of the set of micro agents with an explanation of the capabilities and features of each micro-agent.

In 308, micro-agent provisioning framework 102 may receive a user input indicating one or more selected features for the set of template agents. The features may include authorization of the micro-agents. For example, the features may include an authorization to book the airline ticket or a show in a destination city. In another example, the features may be not to authorize the micro-agent to book the airline ticket but only to search for the airline ticket.

In 310, micro-agent provisioning framework 102 may customize the set of micro agents based on at least the user input to obtain a plurality of micro agents associated with the user device or personal digital assistant. In some aspects, micro-agent provisioning framework 102 may alter a knowledge base of the micro agent based on user data. For example, if the selected features indicate that the user or the personal digital assistant approve that the login credentials of a financial account may be used by the micro agent, the micro agent may store and use the login credentials when interacting with the service provider associated with the financial account. The micro-agent provisioning framework 102 may define a range of tasks that the micro agent (e.g., micro agents 112) may perform based on the selected features. For example, a travel micro agent associated with a first customer may be able to look up available flights and purchase an airline ticket for the desired flight without further approval from a user or from the personal digital assistant 120. A travel micro agent associated with a second customer may be able to look up available flights and presenting a selected flight to user device 104 for further approval. In some aspects, micro-agent provisioning framework 102 may alter a visual design of the micro agent based on preferences of the user. micro-agent provisioning framework 102 may also alter a voice or tone of the micro agent based on a user preference.

It is to be appreciated that not all steps may be needed to perform the disclosure provided herein. Further, some of the steps may be performed simultaneously, or in a different order than shown in FIG. 3, as will be understood be a person of ordinary skill in the art.

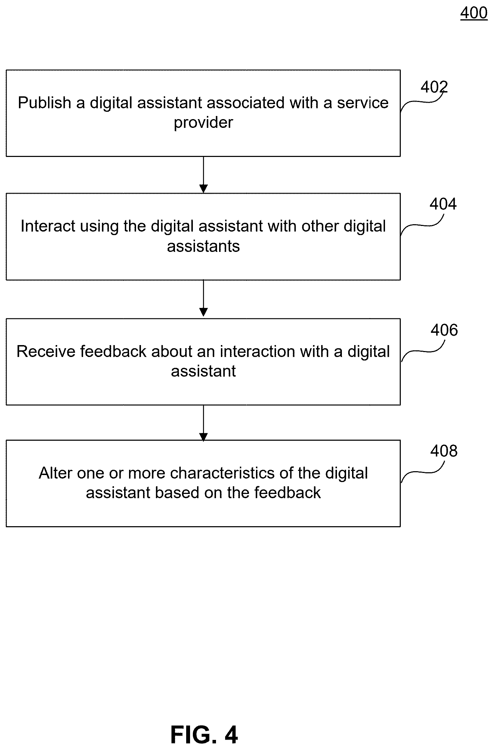

FIG. 4 is a flow chart for a method 400 for attracting a digital agent to a service provider, in accordance with an embodiment of the present disclosure. Method 400 may be performed as a series of steps by a computing unit such as a processor. For example, method 400 may be implemented by service provider system 118 and/or computer system 600 of FIG. 6. Method 400 shall be described with reference to FIG. 1, however, method 400 is not limited to that example embodiment.

In 402, service provider system 118 may publish a digital assistant (e.g., digital assistant 114). For example, service provider system 118 may publish a chatbot via a website of service provider system 118. The chatbot may be published on a landing webpage of the website.

In 404, digital assistant 114 may interact with other digital assistants. For example, digital assistant 114 may interact with micro-agent library 112 to perform one or more tasks.

In 406, service provider system 118 may receive a feedback about an interaction between digital assistant 114 and a micro agent (e.g., micro agent 112a-n). The feedback may include information indication whether the interaction has led to a transaction with the provider (e.g., a purchase), whether the interaction has been abruptly terminated by the micro agent, whether a user input indicating satisfaction or dissatisfaction was received, and the like. The feedback may also include information about the micro agent (e.g., micro agent personality).

In 408, service provider system 118 may alter one or more characteristics of digital assistant 114 based on a feedback on the request. For example, the characteristic of the digital assistant may be altered to match a persona of the micro agent. Service provider system 118 may alter the format of the response based on the feedback. For example, the digital assistant 114 may analyze the micro agent previous responses to determine features of interest and present the features of interest on top of the digital assistant response.

It is to be appreciated that not all steps may be needed to perform the disclosure provided herein. Further, some of the steps may be performed simultaneously, or in a different order than shown in FIG. 4, as will be understood be a person of ordinary skill in the art.

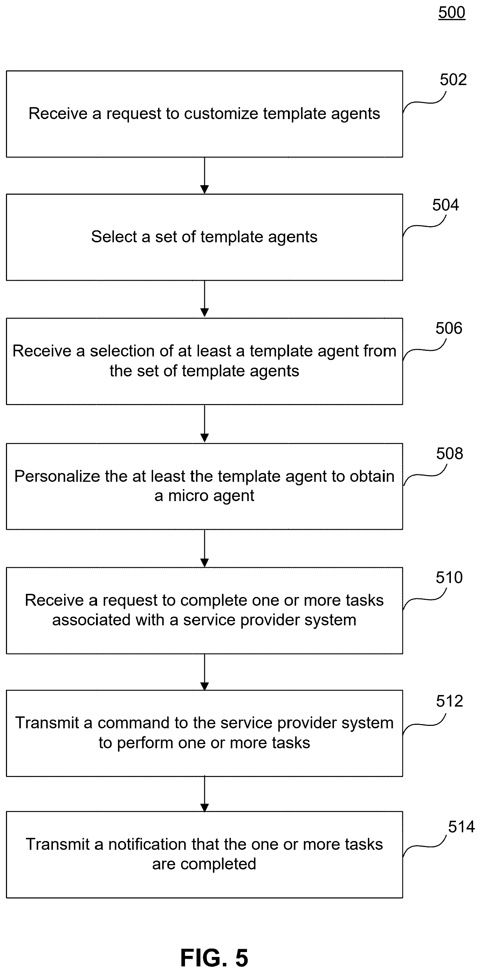

FIG. 5 is a flow chart for a method 500 for handling digital assistant transactions, in accordance with an embodiment of the present disclosure. Method 500 may be performed as a series of steps by a computing unit such as a processor. For example, method 500 may be implemented by micro-agent provisioning framework 102 and/or computer system 600 of FIG. 6. Method 500 shall be described with reference to FIG. 1, however, method 500 is not limited to that example embodiment.

In 502, micro-agent provisioning framework 102 may a request to customize template agents. Template agents may be micro agents that can be customized. In some aspects, the input is generated by personal digital assistant 120.

In 504, micro-agent provisioning framework 102 may select a set of template agents. Micro-agent provisioning framework 102 may select the set of template agents based on customer data such as previous purchases, historical interactions such as websites, demographics, and the like. For example, if the previous purchases includes a high number of airline ticket purchases compared to other purchases, then micro-agent provisioning framework 102 may suggest a "travel" micro agent. The micro-agent provisioning framework 102 may also select additional micro agents.

In 506, micro-agent provisioning framework 102 may receive a selection of at least a template agent from the set of template agents. For example, the selection may indicate a selection of "travel" micro agent. In addition, the selection may include what the micro-agent is authorized to act for without further approval. For example, micro-agent may purchase ticket without further approval.

In 508, micro-agent provisioning framework 102 may personalize the at least the template agent to obtain a micro agent. Micro-agent provisioning framework 102 may personalize the "travel" template with customer data such as the customer frequent flier number.

At 510, micro-agent provisioning framework 102 may receive a request to complete one or more tasks associated with a service provider system. For example, the micro-agent provisioning framework 102 may receive the request to purchase an airline ticket to city A with the travel dates.

At 512, micro-agent provisioning framework 102 may transmit a command to the service provider system to perform one or more tasks. In some aspects, the micro agent may interact (e.g., transmit the command) with an agent of the service provider system 118 (e.g., digital assistant 114). The "travel" micro agent may interact with the service provider system 118 such an airline website to search and purchase the ticket.

At 514, micro-agent provisioning framework 102 may transmit a notification that the one or more tasks are completed. The "travel" micro agent may purchase the ticket from the service provider system 118 and send the notification to personal digital assistant 120. The notification may include the booking number and seat information.

In some aspects, upon receiving a request to complete one or more tasks, micro-agent provisioning framework 102 may identify a micro agent from micro-agent library 112. In some aspects, micro-agent provisioning framework 102 may select two or more micro agents. Micro-agent provisioning framework 102 may divide the one or more tasks between the two or more micro agents. For example, if the input comprises a request to buy an airline ticket and to open a new credit card to be used for the purchase of the airline ticket, a first micro agent may interact with service provider systems to select the best airline ticket and a second micro agent may interact with other service provider systems or the same service provider systems to retrieve offers for new credit cardholders.

In some aspects, micro-agent provisioning framework 102 may select a service provider system using the micro agent. In some aspects, micro agent may select the service provider based on a relation between the micro agent and an agent (e.g., digital assistant 114) of the service provider. For example, the micro agent may look to past transactions to determine whether past transactions with the agent where successful.

It is to be appreciated that not all steps may be needed to perform the disclosure provided herein. Further, some of the steps may be performed simultaneously, or in a different order than shown in FIG. 5, as will be understood be a person of ordinary skill in the art.

### Components of the System

Various embodiments may be implemented, for example, using one or more well-known computer systems, such as computer system 600 shown in FIG. 6. One or more computer systems 600 may be used, for example, to implement any of the embodiments discussed herein, as well as combinations and sub-combinations thereof. For example, the method steps of FIGS. 3, 4, and 5 may be implemented via computer system 600.

Computer system 600 may include one or more processors (also called central processing units, or CPUs), such as a processor 604. Processor 604 may be connected to a communication infrastructure or bus 606.

Computer system 600 may also include user input/output device(s) 603, such as monitors, keyboards, pointing devices, etc., which may communicate with communication infrastructure 606 through user input/output interface(s) 602.

One or more of processors 604 may be a graphics processing unit (GPU). In an embodiment, a GPU may be a processor that is a specialized electronic circuit designed to process mathematically intensive applications. The GPU may have a parallel structure that is efficient for parallel processing of large blocks of data, such as mathematically intensive data common to computer graphics applications, images, videos, etc.

Computer system 600 may also include a main or primary memory 608, such as random access memory (RAM). Main memory 608 may include one or more levels of cache. Main memory 608 may have stored therein control logic (i.e., computer software) and/or data.

Computer system 600 may also include one or more secondary storage devices or memory 610. Secondary memory 610 may include, for example, a hard disk drive 612 and/or a removable storage device or drive 614. Removable storage drive 614 may be a floppy disk drive, a magnetic tape drive, a compact disk drive, an optical storage device, tape backup device, and/or any other storage device/drive.

Removable storage drive 614 may interact with a removable storage unit 618. Removable storage unit 618 may include a computer usable or readable storage device having stored thereon computer software (control logic) and/or data. Removable storage unit 618 may be a floppy disk, magnetic tape, compact disk, DVD, optical storage disk, and/ any other computer data storage device. Removable storage drive 614 may read from and/or write to removable storage unit 618.

Secondary memory 610 may include other means, devices, components, instrumentalities or other approaches for allowing computer programs and/or other instructions and/or data to be accessed by computer system 600. Such means, devices, components, instrumentalities or other approaches may include, for example, a removable storage unit 622 and an interface 620. Examples of the removable storage unit 622 and the interface 620 may include a program cartridge and cartridge interface (such as that found in video game devices), a removable memory chip (such as an EPROM or PROM) and associated socket, a memory stick and USB port, a memory card and associated memory card slot, and/or any other removable storage unit and associated interface.

Computer system 600 may further include a communication or network interface 624. Communication interface 624 may enable computer system 600 to communicate and interact with any combination of external devices, external networks, external entities, etc. (individually and collectively referenced by reference number 628). For example, communication interface 624 may allow computer system 600 to communicate with external or remote devices 628 over communications path 626, which may be wired and/or wireless (or a combination thereof), and which may include any combination of LANs, WANs, the Internet, etc. Control logic and/or data may be transmitted to and from computer system 600 via communication path 626.

Computer system 600 may also be any of a personal digital assistant (PDA), desktop workstation, laptop or notebook computer, netbook, tablet, smart phone, smart watch or other wearable, appliance, part of the Internet-of-Things, and/or embedded system, to name a few non-limiting examples, or any combination thereof.

Computer system 600 may be a client or server, accessing or hosting any applications and/or data through any delivery paradigm, including but not limited to remote or distributed cloud computing solutions; local or on-premises software ("on-premise" cloud-based solutions); "as a service" models (e.g., content as a service (CaaS), digital content as a service (DCaaS), software as a service (SaaS), managed software as a service (MSaaS), platform as a service (PaaS), desktop as a service (DaaS), framework as a service (FaaS), backend as a service (BaaS), mobile backend as a service (MBaaS), infrastructure as a service (IaaS), etc.); and/or a hybrid model including any combination of the foregoing examples or other services or delivery paradigms.

Any applicable data structures, file formats, and schemas in computer system 400 may be derived from standards including but not limited to JavaScript Object Notation (JSON), Extensible Markup Language (XML), Yet Another Markup Language (YAML), Extensible Hypertext Markup Language (XHTML), Wireless Markup Language (WML), MessagePack, XML User Interface Language (XUL), or any other functionally similar representations alone or in combination. Alternatively, proprietary data structures, formats or schemas may be used, either exclusively or in combination with known or open standards.

In some embodiments, a tangible, non-transitory apparatus or article of manufacture comprising a tangible, non-transitory computer useable or readable medium having control logic (software) stored thereon may also be referred to herein as a computer program product or program storage device. This includes, but is not limited to, computer system 600, main memory 608, secondary memory 610, and removable storage units 618 and 622, as well as tangible articles of manufacture embodying any combination of the foregoing. Such control logic, when executed by one or more data processing devices (such as computer system 600), may cause such data processing devices to operate as described herein.

Based on the teachings contained in this disclosure, it will be apparent to persons skilled in the relevant art(s) how to make and use embodiments of this disclosure using data processing devices, computer systems and/or computer architectures other than that shown in FIG. 6. In particular, embodiments can operate with software, hardware, and/or operating system implementations other than those described herein.

The terms "component" or "unit" referred to in this disclosure can include software, hardware, or a combination thereof in an aspect of the present disclosure in accordance with the context in which the term is used. For example, the software may be machine code, firmware, embedded code, or application software. Also for example, the hardware may be circuitry, a processor, a special purpose computer, an integrated circuit, integrated circuit cores, or a combination thereof. Further, if a component or unit is written in the system or apparatus claims section below, the component or unit is deemed to include hardware circuitry for the purposes and the scope of the system or apparatus claims.

The components or units in the following description of the aspects may be coupled to one another as described or as shown. The coupling may be direct or indirect, without or with intervening items between coupled components or units. The coupling may be by physical contact or by communication between components or units.

It is to be appreciated that the Detailed Description section, and not any other section, is intended to be used to interpret the claims. Other sections can set forth one or more but not all exemplary embodiments as contemplated by the inventor(s), and thus, are not intended to limit this disclosure or the appended claims in any way.

While this disclosure describes exemplary embodiments for exemplary fields and applications, it should be understood that the disclosure is not limited thereto. Other embodiments and modifications thereto are possible, and are within the scope and spirit of this disclosure. For example, and without limiting the generality of this paragraph, embodiments are not limited to the software, hardware, firmware, and/or entities illustrated in the figures and/or described herein. Further, embodiments (whether or not explicitly described herein) have significant utility to fields and applications beyond the examples described herein.

Embodiments have been described herein with the aid of functional building blocks illustrating the implementation of specified functions and relationships thereof. The boundaries of these functional building blocks have been arbitrarily defined herein for the convenience of the description. Alternate boundaries can be defined as long as the specified functions and relationships (or equivalents thereof) are appropriately performed. Also, alternative embodiments can perform functional blocks, steps, operations, methods, etc. using orderings different than those described herein.

References herein to "one embodiment," "an embodiment," "an example embodiment," or similar phrases, indicate that the embodiment described can include a particular feature, structure, or characteristic, but every embodiment can not necessarily include the particular feature, structure, or characteristic. Moreover, such phrases are not necessarily referring to the same embodiment. Further, when a particular feature, structure, or characteristic is described in connection with an embodiment, it would be within the knowledge of persons skilled in the relevant art(s) to incorporate such feature, structure, or characteristic into other embodiments whether or not explicitly mentioned or described herein. Additionally, some embodiments can be described using the expression "coupled" and "connected" along with their derivatives. These terms are not necessarily intended as synonyms for each other. For example, some embodiments can be described using the terms "connected" and/or "coupled" to indicate that two or more elements are in direct physical or electrical contact with each other. The term "coupled," however, can also mean that two or more elements are not in direct contact with each other, but yet still co-operate or interact with each other.

Further embodiments are set out in the following clauses:
1. A computer implemented method, comprising:
   receiving, from a user device by at least one processor of an agent-as-a-framework system, a request to customize template agents;
   selecting, using the at least one processor of the agent-as-a-framework system, a set of template agents;
   receiving, using the at least one processor of the agent-as-a-framework system, a selection of at least a template agent;
   personalizing, using the at least one processor the agent-as-a-framework system, the at least the template agent to obtain a micro agent;
   receiving, from the user device by the at least one processor of the agent-as-a-framework system, a request to complete one or more tasks associated with a service provider system;
   transmitting, by the at least one processor and using the micro agent, a command to the service provider system to perform the one or more tasks; and
   transmitting, by the at least one processor to the user device, a notification indicating that the one or more tasks are completed.
2. The computer implemented method of clause 1, further comprising:
   receiving, from the user device, a selection of a plurality of template agents and a user input indicating one or more selected features for the plurality of template agents;
   personalizing, based on at least selected features, the plurality of template agents to obtain a plurality of micro agents; and
   identifying the micro agent from the plurality of micro agents based on the request.
3. The computer implemented method of clause 1, wherein personalizing the at least the template agent comprises one or more of:
   altering a knowledge base of a template agent based on user data;
   defining a range of tasks that the template agent performs;
   altering a visual design of the template agent; and
   altering a voice or tone of the template agent based on a user preference.
4. The computer implemented method of clause 3, wherein the user data comprises past behaviors, purchase transactions, and account information.
5. The computer implemented method of clause 1, wherein the micro agent interacts with an agent of the service provider system.
6. The computer implemented method of clause 5, further comprising:
   altering one or more characteristics of the agent of the service provider system based on a feedback on the request.
7. The computer implemented method of clause 1, further comprising:
   selecting another micro agent from the plurality of pre-customized digital agents; and
   dividing the one or more tasks between the micro agent and the another micro agent.
8. The computer implemented method of clause 1, wherein the service provider system is selected based on a relation between the micro agent and an agent of the service provider system.
9. The computer implemented method of clause 1, wherein the input is generated by a personal digital assistant of a user of the user device.
10. A system, comprising:
   a memory: and
   at least one processor coupled to the memory and configured to:
      receive, from a user device, a request to customize template agents;
      select a set of template agents;
      receive, from the user device, a selection of at least a template agent;
      personalize the at least the template agent to obtain a micro agent;
      receive, from the user device, a request to complete one or more tasks associated with a service provider system;
      transmit, using the micro agent, a command to the service provider system to perform the one or more tasks; and
      transmit, to the user device, a notification indicating that the one or more tasks are completed.
11. The system of clause 10, wherein the at least one processor is further configured to:
   receive, from the user device, a selection of a plurality of template agents and a user input indicating one or more selected features for the plurality of template agents;
   personalize, based on at least selected features, the plurality of template agents to obtain a plurality of micro agents; and
   identify the micro agent from the plurality of micro agents based on the request.
12. The system of clause 10, wherein to personalize the at least the template agent, the at least one processor is further configured to:
   alter a knowledge base of a template agent based on user data;
   define a range of tasks that the template agent performs;
   alter a visual design of the template agent; or
   alter a voice or tone of the template agent based on a user preference.
13. The system of clause 10, wherein the micro agent interacts with an agent of the service provider system.
14. The system of clause 13, wherein the at least one processor is further configured to:
   alter one or more characteristics of the agent of the service provider system based on a feedback on the request.
15. The system of clause 10, wherein the input is generated by a personal digital assistant of a user of the user device.
16. A non-transitory computer-readable device having instructions stored thereon that, when executed by at least one computing device, cause the at least one computing device to perform operations comprising:
   receiving, from a user device, a request to customize template agents;
   selecting a set of template agents;
   receiving a selection of at least a template agent;
   personalizing the at least the template agent to obtain a micro agent;
   receiving, from the user device, a request to complete one or more tasks associated with a service provider system;
   transmitting, using the micro agent, a command to the service provider system to perform the one or more tasks; and
   transmitting, to the user device, a notification indicating that the one or more tasks are completed.
17. The non-transitory computer-readable device of clause 16, wherein the operations further comprise:
   receiving, from the user device, a selection of a plurality of template agents and a user input indicating one or more selected features for the plurality of template agents;
   personalizing, based on at least selected features, the plurality of template agents to obtain a plurality of micro agents; and
   identifying the micro agent from the plurality of micro agents based on the request.
18. The non-transitory computer-readable device of clause 16, wherein the micro agent interacts with an agent of the service provider system.
19. The non-transitory computer-readable device of clause 16, wherein the operations further comprise:
   altering one or more characteristics of the agent of the service provider system based on a feedback on the request.
20. The non-transitory computer-readable device of clause 16, wherein the input is generated by a personal digital assistant of a user of the user device.

The breadth and scope of this disclosure should not be limited by any of the above-described exemplary embodiments, but should be defined only in accordance with the following claims and their equivalents.

## Claims

1. A computer implemented method, comprising:
receiving, from a user device by at least one processor of an agent-as-a-framework system, a request to customize template agents;
selecting, using the at least one processor of the agent-as-a-framework system, a set of template agents;
receiving, using the at least one processor of the agent-as-a-framework system, a selection of at least a template agent;
personalizing, using the at least one processor the agent-as-a-framework system, the at least the template agent to obtain a micro agent;
receiving, from the user device by the at least one processor of the agent-as-a-framework system, a request to complete one or more tasks associated with a service provider system;
transmitting, by the at least one processor and using the micro agent, a command to the service provider system to perform the one or more tasks; and
transmitting, by the at least one processor to the user device, a notification indicating that the one or more tasks are completed.

2. The computer implemented method of claim 1, further comprising:
receiving, from the user device, a selection of a plurality of template agents and a user input indicating one or more selected features for the plurality of template agents;
personalizing, based on at least selected features, the plurality of template agents to obtain a plurality of micro agents; and
identifying the micro agent from the plurality of micro agents based on the request.

3. The computer implemented method of claim 1, wherein personalizing the at least the template agent comprises one or more of:
altering a knowledge base of a template agent based on user data;
defining a range of tasks that the template agent performs;
altering a visual design of the template agent; and
altering a voice or tone of the template agent based on a user preference.

4. The computer implemented method of claim 3, wherein the user data comprises past behaviors, purchase transactions, and account information.

5. The computer implemented method of claim 1, wherein the micro agent interacts with an agent of the service provider system.

6. The computer implemented method of claim 5, further comprising:
altering one or more characteristics of the agent of the service provider system based on a feedback on the request.

7. The computer implemented method of claim 1, further comprising:
selecting another micro agent from the plurality of pre-customized digital agents; and
dividing the one or more tasks between the micro agent and the another micro agent.

8. The computer implemented method of claim 1, wherein the service provider system is selected based on a relation between the micro agent and an agent of the service provider system.

9. The computer implemented method of claim 1, wherein the input is generated by a personal digital assistant of a user of the user device.

10. A system, comprising:
a memory: and
at least one processor coupled to the memory and configured to:
receive, from a user device, a request to customize template agents;
select a set of template agents;
receive, from the user device, a selection of at least a template agent;
personalize the at least the template agent to obtain a micro agent;
receive, from the user device, a request to complete one or more tasks associated with a service provider system;
transmit, using the micro agent, a command to the service provider system to perform the one or more tasks; and
transmit, to the user device, a notification indicating that the one or more tasks are completed.

11. The system of claim 10, wherein the at least one processor is further configured to:
receive, from the user device, a selection of a plurality of template agents and a user input indicating one or more selected features for the plurality of template agents;
personalize, based on at least selected features, the plurality of template agents to obtain a plurality of micro agents; and
identify the micro agent from the plurality of micro agents based on the request.

12. The system of claim 10, wherein to personalize the at least the template agent, the at least one processor is further configured to:
alter a knowledge base of a template agent based on user data;
define a range of tasks that the template agent performs;
alter a visual design of the template agent; or
alter a voice or tone of the template agent based on a user preference.

13. The system of claim 10, wherein the micro agent interacts with an agent of the service provider system, wherein optionally the at least one processor is further configured to:
alter one or more characteristics of the agent of the service provider system based on a feedback on the request.

14. The system of claim 10, wherein the input is generated by a personal digital assistant of a user of the user device.

15. A non-transitory computer-readable device having instructions stored thereon that, when executed by at least one computing device, cause the at least one computing device to perform the method according to any of claims 1 to 9.
